# EUROPEAN PATENT SPECIFICATION

(11) **EP 3 382 245 B1**
(45) Date of publication and mention of the grant of the patent: **13.05.2020**
(21) Application number: 18162970.0
(22) Date of filing: 20.03.2018
(51) Int. Cl.: F16K 27/02, F16K 31/06

(54) **SOLENOID VALVE**
MAGNETVENTIL
SOUPAPE À SOLÉNOÏDE

(30) Priority: 27.03.2017 JP 2017061560
(43) Date of publication of application: 03.10.2018
(73) Proprietor: CKD Corporation, Komaki-shi, Aichi 485-8551 (JP)
(72) Inventor: KATOH, Atsushi, Komaki-shi, Aichi 485-8551 (JP); ITOH, Katsushi, Komaki-shi, Aichi 485-8551 (JP); IGUCHI, Seiji, Komaki-shi, Aichi 485-8551 (JP); YOSHINO, Kohei, Komaki-shi, Aichi 485-8551 (JP)
(74) Representative: Prüfer & Partner mbB Patentanwälte · Rechtsanwälte

(56) References cited:
- EP-A1- 1 895 218
- CN-A- 102 506 217
- US-A- 5 535 783
- US-A1- 2005 092 951
- US-A1- 2012 292 544
- US-A1- 2013 099 146

## Description

### BACKGROUND

### Technical field

This disclosure relates to a solenoid valve configured to attract a movable core upon energization of a hollow cylindrical solenoid part to thereby move a valve element.

### Related Art

Conventionally, for example, as disclosed in Patent Document 1, a coil assembly and a body-pipe assembly are coupled to each other in such a way that a fixed core welded to an upper end of a hollow portion of a guide pipe of the body-pipe assembly is inserted through a hollow hole of an outer molded part and fixed with a wave washer and a stopper ring at the upper end. The guide pipe is formed, on its lower part, with a flange which is sandwiched between a body (a valve body) and another part.

During operation of a solenoid valve, however, since the plunger repeats to strike or collide against the fixed core, stress concentration may occur in a bent portion of the guide pipe forming the flange, resulting in breakage of the guide pipe.

To prevent such breakage of the guide pipe, it is conceivable to provide a stepped portion between the flange fixedly held between the body and another part and the fixed core to absorb the impact from a collision.

Patent Document 2 discloses a guide pipe in which a stepped portion is provided between a fixed core and a flange fixedly held between a body (a valve body) and another part. However, Patent Document 2 does not mention the technical meaning of the stepped portion.

US 2013/099146 A1 discloses a solenoid valve according to the preamble of claim 1.

### Related Art Documents

### Patent Documents

Patent Document 1: Japanese patent No. 2955511
Patent Document 2: Japanese unexamined patent application publication No. H9-196205(1997)

### SUMMARY

### Technical Problems

However, the solenoid valve of Patent Document 2 has the following problems. Specifically, in the solenoid valve of Patent Document 1, an urging spring is arranged in series with the guide pipe. In the solenoid valve of Patent Document 2, similarly, an urging spring is arranged in series with the guide pipe, so that the total height of the solenoid valve is apt to be high.

In recent years, some solenoid valves are integrated for use and further some solenoid valves are often disposed sideways on a wall. In this regard, reduction in the height of a solenoid valve has been strongly demanded in a relevant industrial field.

The present invention has been made to solve the above problems and has a purpose to provide a solenoid valve capable of preventing breakage of a guide pipe due to impact from a plunger and achieving a low height.

### Means of Solving the Problems

(1) The above mentioned problem is solved by the solenoid valve according to claim 1. The configuration according to the present invention enables the diameter-widening portion forming the large-diameter portion to absorb the impact caused when the movable core strikes against an inner surface of a top face (a top wall) of the magnetic pipe. This can reduce stress concentration applied on the flange whereby the magnetic pipe is fixed to a body (a valve body). Thus, the magnetic pipe is less likely to be broken. In addition, the urging spring is accommodated inside the large-diameter portion in parallel, not in series, with the magnetic pipe in an axial direction (i.e., in a position concentric with the magnetic pipe). This configuration can achieve reduction in the total height of the solenoid valve, which can meet the need for a compact solenoid valve in the relevant industrial field.
(2) Further according to the configuration according to the present invention, when the urging spring is mounted in the large-diameter portion, one end of the urging spring is supported by the diameter-widening portion. However, since the diameter-widening portion extends perpendicular to the large-diameter portion, the urging spring can be stably held over its entire circumference. Thus, the urging force of the urging spring can be uniformly distributed over the entire circumference of the valve element. The response property of the valve can therefore be stably enhanced. If the diameter-widening portion includes a tapered surface as disclosed in Patent Document 2, for instance, the urging spring mounted as above tends to incline with respect to the axis of the valve element. This urging spring thus could not stably produce uniform pressing force over the entire circumference of the valve seat. Such a configuration causes a problem with unstable sealing performance and may increase sliding resistance, leading to operation failure.
(3) In the solenoid valve according to the present invention, preferably, the movable core is provided with an upper wear ring on an upper-end side surface, and a lower wear ring and a flange on a lower-end side surface, the urging spring is placed so that an end of the urging spring is abutted on the flange, the movable core includes an intermediate side surface between the upper wear ring and the lower wear ring, and the upper wear ring and the lower wear ring are configured to form a clearance between the intermediate side surface of the movable core and the sliding inner surface of the magnetic pipe.

A guide pipe is conventionally made of non-magnetic metal. This is because a magnetic metal guide pipe allows a magnetic flux to flow therethrough, so that a magnetic flux allowed to flow to a movable core decreases, resulting in lowering of a force that attracts the movable core.

In contrast, in the invention, a part of the core is deformed to constitute a fixed core and it is therefore difficult to connect an upper end of the guide pipe and the fixed core by welding for sealing. Accordingly, the flare pipe with its upper end closed by a top wall is used to allow the movable core to strike against the inner surface of the top wall of the flare pipe, instead of the fixed core. In such a configuration, if the flare pipe is made of non-magnetic material, the top wall of this flare pipe becomes resistance to a magnetic circuit, which causes a problem with a decrease in magnetic flux. To avoid such a defect, the flare pipe in the present invention is made of magnetic material.

To reduce the sliding resistance to a minimum between the movable core and the flare pipe, furthermore, the upper wear ring and the lower wear ring are in contact with the inner peripheral surface of the flare pipe. Thus, a clearance of about 0.5 mm is formed between the outer peripheral surface of a body part, namely, the intermediate side surface, of the movable core and the inner peripheral surface, namely, the sliding inner surface, of the flare pipe.

Accordingly, the outer peripheral surface of the body part of the movable core does not contact the inner peripheral surface of the flare pipe. This can suppress metallic wear due to sliding and prevent an increase in sliding resistance. The durability of the solenoid valve can therefore be improved.

### BRIEF DESCRIPTION OF THE DRAWINGS

FIG. 1 is a cross sectional view taken along a line A-A in FIG. 3;
FIG. 2 is a cross sectional view taken along a line B-B in FIG. 3;
FIG. 3 is a perspective view of a solenoid valve in one embodiment of the invention;
FIG. 4 is an exploded perspective view of a part of a coil-core assembly;
FIG. 5 is an exploded perspective view of a body-pipe assembly;
FIG. 6 is a perspective view of a coil assembly;
FIG. 7 is a perspective view of a finished body-pipe assembly, in which screws are not illustrated;
FIG. 8 is an exploded perspective view showing a coupling structure and a method for assembling a coil assembly and a body-pipe assembly, the coupling structure and the method not being part of the present invention;
FIG. 9 is a conceptual diagram showing a processing method for drawing a flat steel plate, the processing method not being part of the present invention;
FIG. 10 is a cross-sectional view showing a conventional processing method for drawing;
FIG. 11 is a cross-sectional view showing a fourth step of a drawing process, not part of the present invention;
FIG. 12 is a cross-sectional view showing a fifth step of the drawing process of FIG. 11;
FIG. 13 is a cross-sectional view showing a state where a clip is set in place, the clip not being part of the present invention;
FIG. 14 is a diagram showing a positional relationship between the clip of FIG. 13, a bent portion, and an inwardly-bent flange; and
FIG. 15 is an explanatory view to show a magnetic circuit in a solenoid valve according to the present invention.

### DETAILED DESCRIPTION OF THE EXEMPLARY EMBODIMENTS

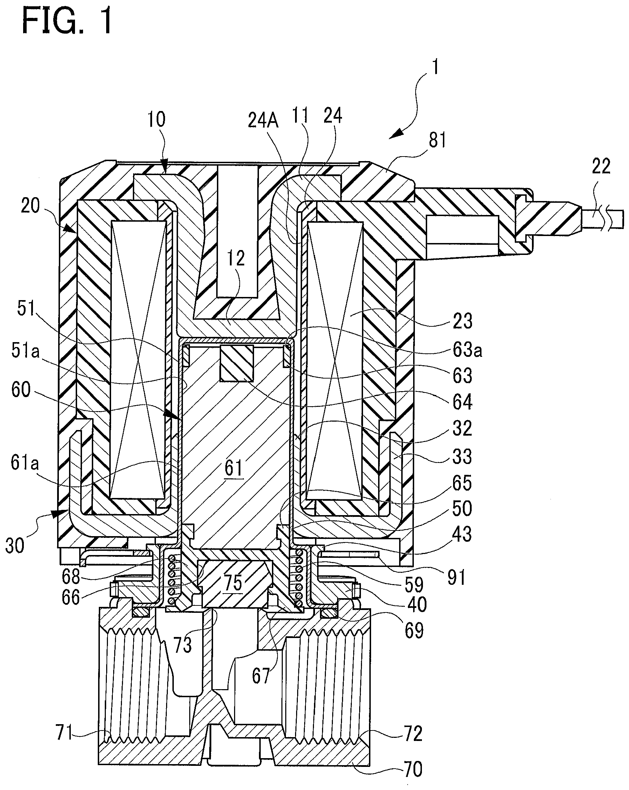

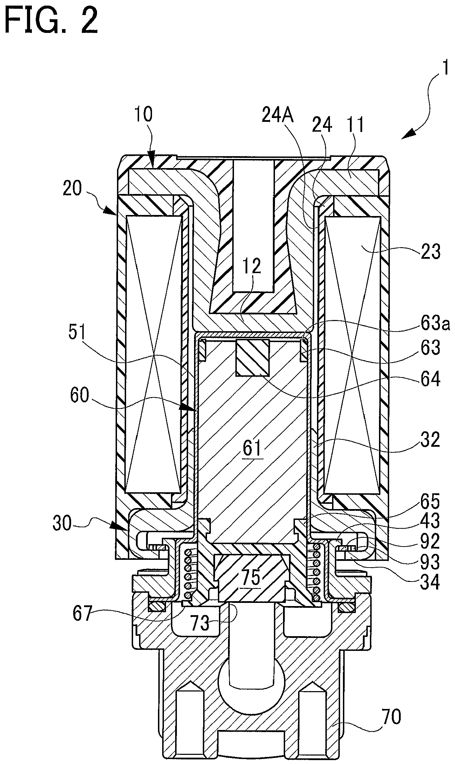

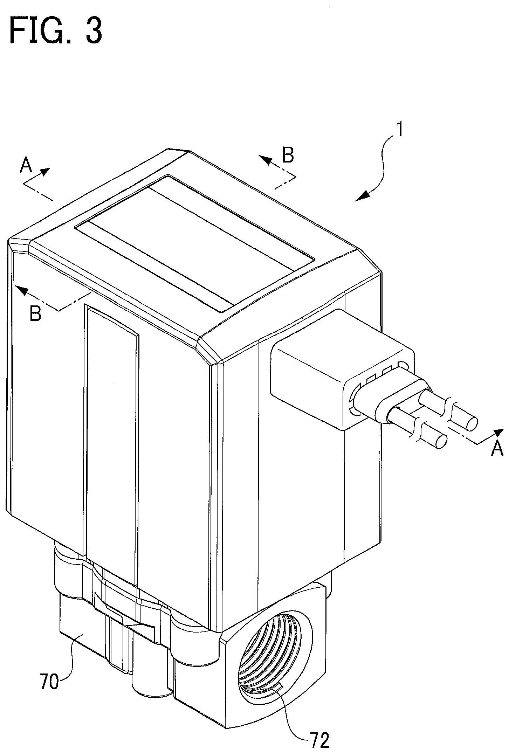

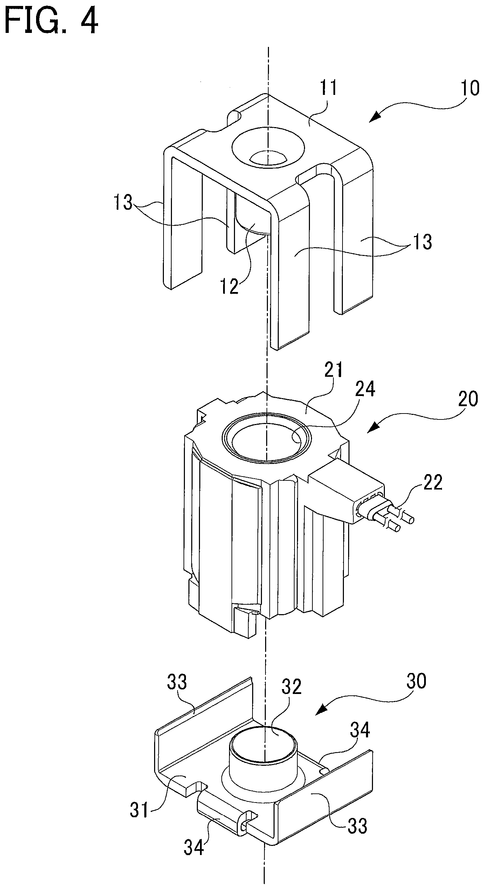

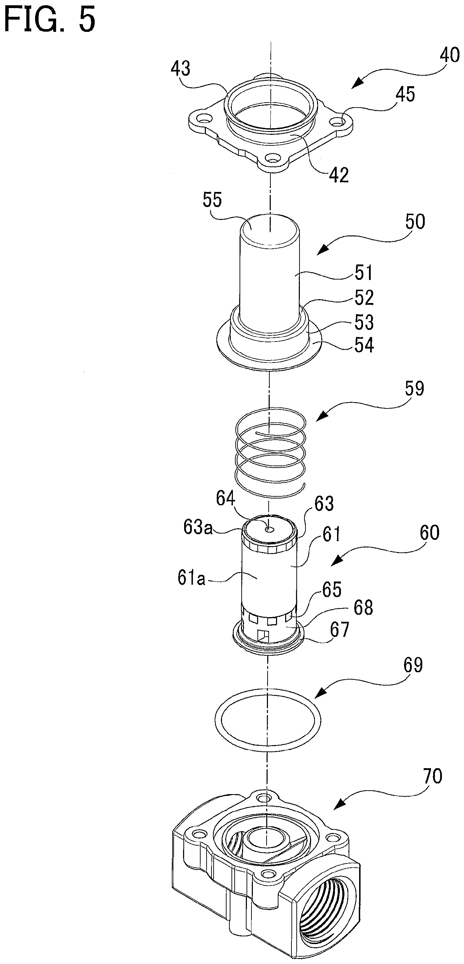

A detailed description of one embodiment of a solenoid valve of the present invention will now be given referring to the accompanying drawings. FIG. 3 is a perspective view of a solenoid valve 1 in the present embodiment. FIG. 1 is a cross-sectional view taken along a line A-A in FIG. 3, and FIG. 2 is a cross-sectional view taken along a line B-B in FIG. 3. FIG. 4 is an exploded perspective view of a part of a coil-core assembly. FIG 5 is an exploded perspective view of a body-pipe assembly.

As shown in FIGs. 1, 2, and 4, the coil-core assembly includes an upper core 10 having a nearly inverted U shape, a coil molded part 20 (one example of a solenoid part) containing a winding coil 23 embedded by molding, and a lower core 30. The upper core 10 and the lower core 30 are each made of ferromagnetic material to form a part of a magnetic circuit.

The upper core 10 includes an upper plate portion 11 having a nearly rectangular shape and being formed, at its center, with a protruding portion 12 having a bottom-closed cylindrical shape protruding downward in FIG. 4. The upper core 10 further includes four side plate portions 13 continuously extending downward two from each of two opposite side edges of the upper plate portion 11. The protruding portion 12 has a hollow cylindrical shape provided with a bottom wall portion 12a at a distal end (a lower end in the figures) and an opening, or open end, at a proximal end (an upper end in the figures).

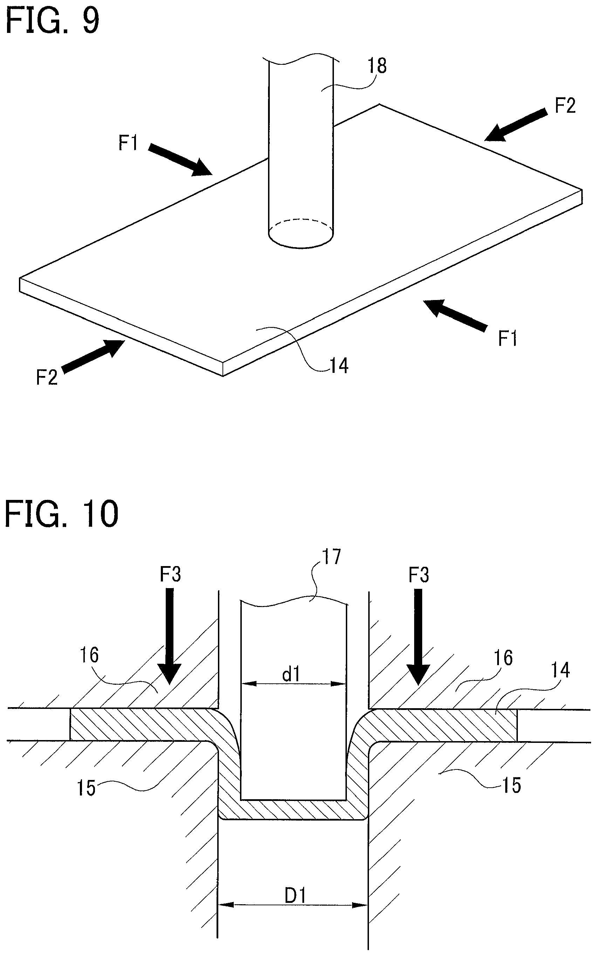

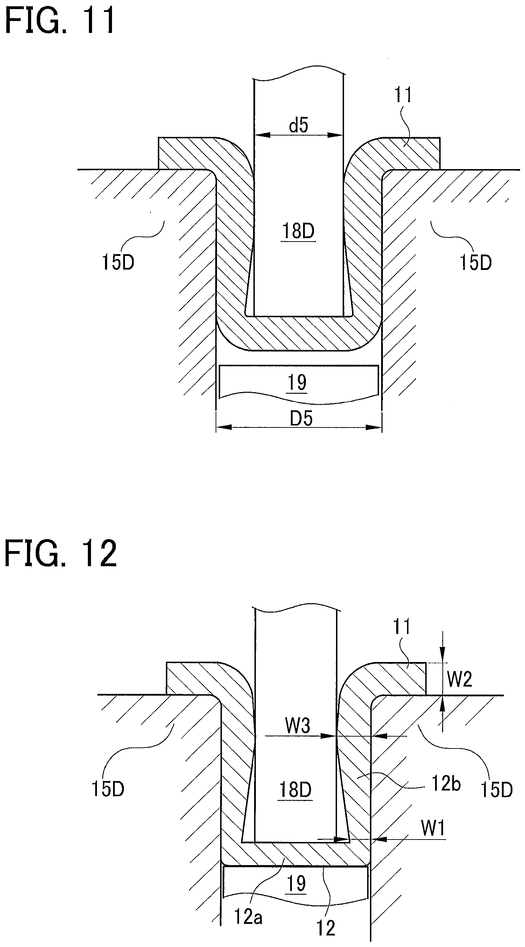

Herein, a method for producing the protruding portion 12 will be described below. FIGs. 9, 11, and 12 are diagrams to show a processing method for subjecting a flat steel plate 14 made of ferromagnetic material to a drawing process. Specifically, FIGs. 11 and 12 are cross-sectional diagrams to show a fourth step and a fifth step. FIG. 10 is a diagram to show a conventional drawing process.

As shown in FIG. 10, the conventional drawing process is performed by fixedly clamping a portion of a flat steel plate (a blank) except a portion to be drawn between a pair of an upper die 16 and a lower die 15 applied with a high force F3 and then moving a punch 17 downward to draw or stretch the blank. According to this conventional process, the thickness of the clamped portion of the flat steel plate other than the drawn portion is not reduced, and only the drawn portion is stretched thinner to form a hollow portion having a bottom wall portion.

In contrast, the drawing process in the present embodiment will be described below. As shown in FIGs. 9, 11, and 12, the present drawing process uses only a lower die without using an upper die. In the present embodiment, the drawing process for forming the protruding portion 12 is performed sequentially in five steps; a first step, a second step, and a third step, which are not illustrated, a fourth step shown in FIG. 11 and a fifth step shown in FIG. 12.

In a first step, not shown, there are used a punch having the diameter larger than the diameter d1 of the punch 17 in FIG. 10 and a lower die with a processing hole having the inner diameter larger than the diameter D1 of the lower die 15 in FIG. 10. An end face of the processing hole of the lower die is formed with a tapered surface. In the first step, the flat steel plate 14 is thus formed into a truncated cone shape.

In a second step, not shown, there are used a punch having the diameter smaller than the diameter of the punch used in the first step and a lower die with a processing hole having the inner diameter smaller than the inner diameter of the lower die used in the first step. An end face of the processing hole of the lower die in this second step is formed with a more steeply tapered surface than in the first step to form the truncated-conical flat steel plate 14 into a shape close to a cylindrical shape.

In a third step, not shown, there are used a punch having the diameter smaller than the diameter of the punch used in the second step and a lower die with a processing hole having the inner diameter smaller than the inner diameter of the lower die used in the second step. An end face of the processing hole of the lower die in this third step is formed with a still more steeply tapered surface than in the second step to further form the truncated-conical flat steel plate 14 into a shape closer to a cylindrical shape.

FIG. 11 is a diagram showing a fourth step of the drawing process. A punch 18D used in the fourth step has the diameter d5 larger than the diameter of the punch used in the third step and a lower die 15D used in the fourth step has a processing hole having the inner diameter D5 larger than the inner diameter of the lower die used in the third step. The processing hole in the fourth step is cylindrical.

In FIG. 9, forces F1 and F2 are externally exerted on the flat steel plate 14, or its end faces, from lateral directions. However, if the thickness W1 of a peripheral, or side, wall portion 12b of the protruding portion 12 near the bottom wall portion 12a is as thick as necessary, the forces F1 and F2 do not need to be externally applied.

FIG. 12 is a diagram showing a fifth step of the drawing process. As shown in FIG. 12, a lower slide die 19 which slides inside the processing hole of the lower die 15D moves upward in a state shown in FIG. 11, pushing up the flat steel plate and pressing it against the punch 18D to arrange the shape of the bottom (12a) of the flat steel plate. The protruding length of the protruding portion 12 is appropriately determined so that its distal end protrudes into the hollow portion of the coil molded part 20 (a hollow hole 24A of the coil bobbin 24) by a distance equal to or more than one third of the axial length of the hollow portion.

Through the first to fifth steps, the protruding portion 12 is finished. In the case of drawing process, the peripheral wall portion 12b of the protruding portion 12 near the bottom wall portion 12a is most stretched and thinned to a thickness W1. In the present embodiment, therefore, a portion of the flat steel plate other than a portion to be drawn (a drawn portion) which will form the peripheral wall portion 12b is unclamped between upper and lower dies, so that metal material of the portion other than the drawn portion is allowed to move toward the drawn portion undergoing stretching downward. Accordingly, in the protruding portion 12, the thickness W3 of the peripheral wall portion 12b near the open end (a proximal end side) far from the bottom wall portion 12a (a distal end side) is thicker than the thickness W2 of the flat steel plate used as the blank. This ensures that the thickness W1 of the peripheral wall portion 12b near the bottom wall portion 12a is as thick as 80% or more of the thickness W2 of the blank, flat steel plate.

The diameter d5 of the punch 18D is set smaller than the diameter d1 of the punch 17 in FIG. 10 in order to prevent contact with the inner surface of the peripheral wall portion 12b of the protruding portion 12 near the open end far from the bottom wall portion 12a. This is because, in the drawing process, the forces F1 and F2 are applied as shown in FIG. 9 to cause metal material to flow to the protruding portion 12 in order to prevent thinning of the peripheral wall portion 12b and thus the inner diameter of the protruding portion 12 is reduced.

As shown in FIG. 4, the coil molded part 20 is made in such a manner that the coil 23 is wound on the outer periphery of the plastic hollow coil bobbin 24, and then this coil bobbin 24 with the coil 23 wound thereon is coated with resin by insert molding to form a molded portion 21.

The coil molded part 20 is provided with external connecting terminals 22 which serve to electrically connect the coil 23 to an external power supply. The protruding portion 12 of the upper core 10 is inserted from above into the hollow hole 24A of the coil bobbin 24 which constitutes the hollow portion of the coil molded part 20.

The lower core 30 includes a bottom plate portion 31 having a nearly rectangular shape, at the center of which, there is formed a protruding portion 32 cylindrically protruding upward in FIG. 4. The lower core 30 further includes side plate portions 33 extending upward one from each of two opposite side edges of the bottom plate portion 31, i.e., toward the side plate portions 13 of the upper core 10, and a pair of inwardly-bent flanges 34 formed one in each of two opposite side edges of the bottom plate portion 31 other than the side edges formed with the side plate portions 33. Each of the flanges 34 has a laterally-facing U-shaped cross section and is open inward as shown in FIG. 2.

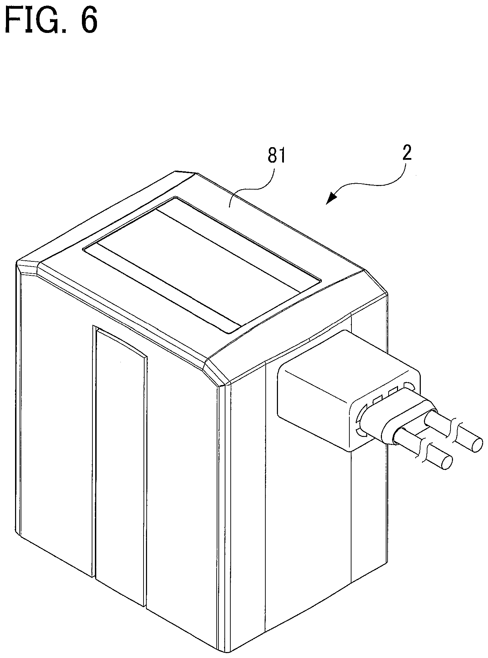

The protruding portion 32 of the lower core 30 is inserted into the hollow hole 24A of the coil bobbin 24 from below. While the coil molded part 20 is held between the upper core 10 and the lower core 30, the leading ends of the side plate portions 13 are welded to the corresponding side plate portions 33. Thus, a coil-core assembly is completed. This coil-core assembly is then coated with resin by insert molding to form a molded portion 81. A coil assembly 2 shown in FIG. 6 is finished.

A body-pipe assembly 3 is successively described below. As shown in FIGs. 1,2, and 5, a stuffing 40 serving as a fastening tool is secured to a body (a valve body) 70 with four screws not shown while a flare pipe (one example of a magnetic pipe) 50 and an O ring 69 are held therebetween.

The stuffing 40 has a nearly square plate-like shape formed with screw holes 45 in four corners. At the center of the stuffing 40, a circumferential side wall 42 protruding upward. This side wall 42 is provided, at its leading end (an upper end in FIG. 5), with a bent portion 43 bent radially outwardly over the entire circumference of the side wall 42.

The flare pipe 50 includes a hollow cylindrical portion 51 closed by a top face (a top wall) 55 and a large-diameter portion 53 having a larger diameter than the cylindrical portion 51 by a diameter-widening portion 52. This diameter-widening portion 52 perpendicularly extends radially outward from the cylindrical portion 51 to the large-diameter portion 53 so that the cylindrical portion 51 and the large-diameter portion 53 are parallel with each other.

The large-diameter portion 53 is provided, at its lower end, with a flange 54 extending radially outward. The flare pipe 50 is made of magnetic material, which will form a part of a magnetic circuit. Inside the large-diameter portion 53, a cylindrical compression spring (one example of an urging spring) 59 is accommodated in such a configuration that the compression spring 59 is wound along the inner peripheral surface of the large-diameter portion 53 and is arranged in parallel (i.e. concentrically), not in series, with the flare pipe 50 in an axial direction.

A plunger 60 serving as a movable core includes a plunger body 61 made of ferromagnetic material. The plunger body 61 is formed, at the center of its upper face, with a hole in which a silencing rubber 64 is mounted to protrude from the upper face. The silencing rubber 64 serves to reduce impact noise generated when the plunger 60 is attracted toward the protruding portion 12 and strikes against an inner surface of the top wall 55 of the flare pipe 50.

The plunger body 61 is formed with a plastic upper wear ring 63 circumferentially placed on an upper part of an outer peripheral surface. The upper wear ring 63 protrudes radially outward at regular intervals. The plunger body 61 is further formed, on its upper face, with a plastic ring 63a having a plurality of projections protruding outward in an axial direction (upward in the figures). The plastic ring 63a is provided integral with the upper wear ring 63 by integral molding. Thus, the ring 63a can mitigate the impact caused when the plunger 60 is attracted as above. This can prevent breakage of the flare pipe 50 and also enhance the returning property of the plunger body 61.

As shown in FIG. 1, the plunger body 61 is provided, at its lower end, with a valve element holder 68 made of resin by integral molding. On an outer periphery of an upper part of the valve element holder 68, a lower wear ring 65 protruding radially outward is arranged in a position above the lower end of the cylindrical portion 51 of the flare pipe 50 facing the holder 68.

The upper wear ring 63 and the lower wear ring 65 each protruding radially outward as described above are in contact with an inner peripheral surface (i.e. a sliding inner surface 51a) of the cylindrical portion 51. In the present embodiment, a clearance of about 0.5 mm is thus formed, even though it is not explicitly illustrated in the figures, between an outer peripheral surface (i.e. an intermediate side surface 61a located between the upper wear ring 63 and the lower wear ring 65) of the plunger body 61 and the inner peripheral surface (the sliding inner surface 51a) of the cylindrical portion 51.

Accordingly, the outer peripheral surface (the intermediate side surface 61a) of the plunger body 61 is not in contact with the inner peripheral surface (the sliding inner surface 51a) of the cylindrical portion 51. Thus, the plunger body 61 and the cylindrical portion 51 do not slide or rub against each other during operation. This can prevent a deterioration of sliding surfaces due to repeated operations and generation of abrasion powder which may increase sliding resistance, leading to operation failure.

Furthermore, the above clearance acts as magnetic resistance to a magnetic flux laterally flowing from the outer peripheral surface (61a) of the plunger boy 61 to the inner peripheral surface (51a) of the cylindrical portion 51. Accordingly, the attraction force generated between the inner peripheral surface (51a) of the cylindrical portion 51 and the outer peripheral surface (61a) of the plunger body 61 can be reduced.

The valve element holder 68 is provided with a flange 67 protruding radially outward from a lower end of the outer periphery of the holder 68. A cavity 66 is formed in the holder 68, in which a rubber valve element 75 is mounted.

The body 70 is provided with a first passage 71 and a second passage 72. These first passage 71 and second passage 72 are communicated with each other through a valve hole in which a valve seat 73 is provided. When the valve element 75 is moved into contact with the valve seat 73, the first passage 71 and the second passage 72 are blocked from communicating with each other. On the other hand, when the valve element 75 is separated from the valve seat 73, the first passage 71 and the second passage 72 are allowed to communicate with each other.

The plunger 60 is slidably held within the flare pipe 50 through the upper wear ring 63 and the lower wear ring 65. The upper end of the compression spring 59 is abutted on the inner surface of the diameter-widening portion 52 of the flare pipe 50 and the lower end of the compression spring 59 is abutted on the flange 67 of the plunger 60. The compression spring 59 urges the plunger 60 in a direction to move the valve element 75 into contact with or toward the valve seat 73.

Herein, the diameter-widening portion 52 is perpendicular to each of the cylindrical portion 51 and the large-diameter portion 53. Thus, the compression spring 59 is stably abutted on the inner surface of the diameter-widening portion 52. This can stabilize the urging force of the compression spring 59 and achieve a stable motion of the plunger 60. Accordingly, variation in response speed of the solenoid valve 1 can be reduced and hence constant response timing can be realized. Specifically, when the plunger 60 is to be attracted toward the protruding portion 12, the plunger 60 is moved by the magnetic force generated by energization of the coil 23 (the coil molded part 20), so that the timing of driving the plunger 60 is stable. In contrast, the force of the compression spring 59 is weaker than the attraction force of the coil molded part 20 and the plunger 60 is attracted toward the protruding portion 12 by residual magnetism, thereby possibly causing a delay in the driving timing of moving the plunger 60 downward. To prevent such a delay, the urging force of the compression spring 59 highly needs to be stabilized.

Furthermore, the compression spring 59 may enter the clearance between the plunger 60 and the cylindrical portion 51, leading to operation failure. To prevent such a defect, it is also necessary to stabilize the position of the compression spring 59.

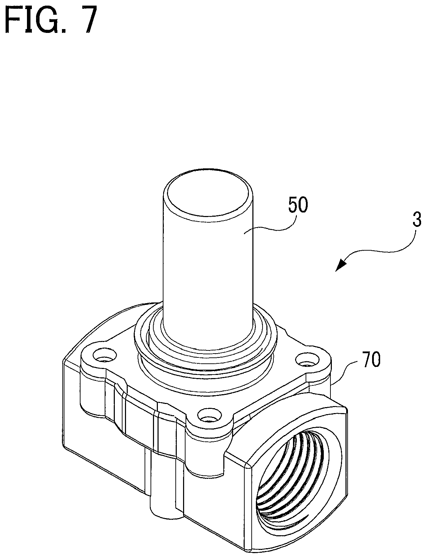

The stuffing 40 is secured to the body 70 with four screws not shown while the flare pipe 50 and the O ring 69 are held between the stuffing 40 and the body 70. Thus, the body-pipe assembly 3 shown in FIG. 7 (the screws are not shown) is finished.

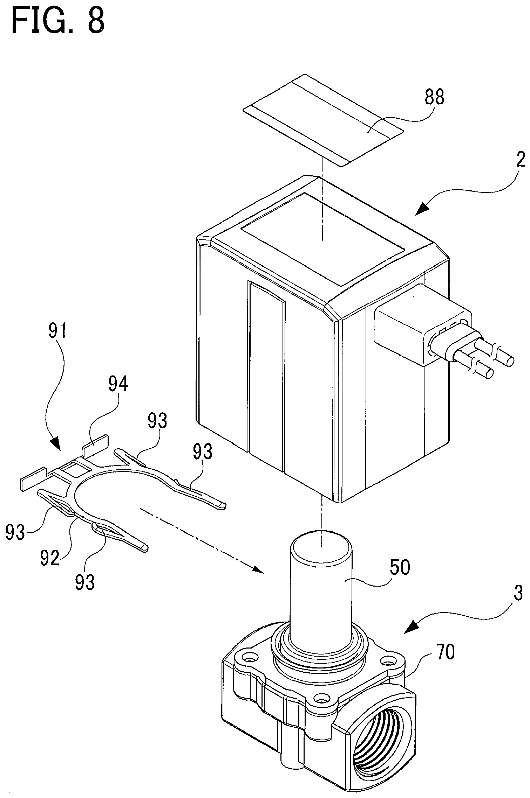

Next, a structure of coupling the coil assembly 2 and the body-pipe assembly 3 and a method for assembling them will be described referring to FIG. 8.

The flare pipe 50 of the body-pipe assembly 3 is inserted into the hollow hole 24A of the coil assembly 2 from below. A clip 91 is then placed in position to couple the coil assembly 2 and the body-pipe assembly 3. In the present embodiment, the clip 91 is made by press working of a resilient stainless-steel sheet having a thickness of about 1 mm.

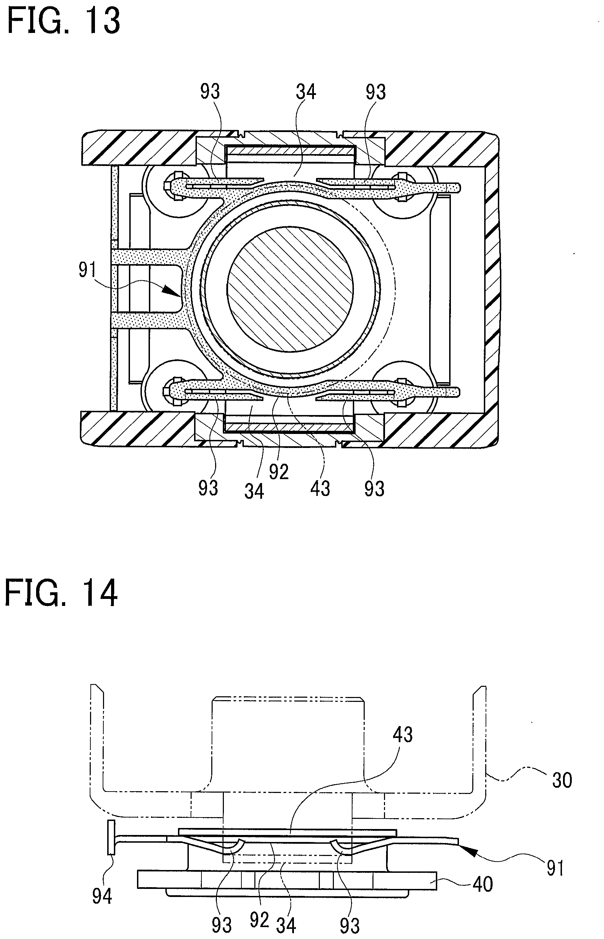

As shown in FIG. 8, the clip 91 includes a nearly U-shaped clip body 92 and a pair of lugs 94 which can be pinched by an operator. The clip body 92 is provided with four leaf springs 93 extending outward. Each of the leaf springs 93 is bent into an inverted triangular shape when seen from side (FIG. 14) and thus has a spring force acting in an up-down direction.

As shown in FIG. 2, the clip body 92 is inserted in the space between each inwardly-bent flange 34 of the lower core 30 of the coil assembly 2 and a bent portion 43 of the stuffing 40 of the body-pipe assembly 3.

FIG. 13 is a cross-sectional view showing the clip 91 set in position. FIG. 14 shows a positional relationship between the clip 91, the bent portion 43, and the inwardly-bent flanges 34. As shown in FIGs. 13 and 14, a part of the upper surface of the clip body 92 presses against the lower surface of the bent portion 43 of the stuffing 40. Further, the apex portions of the four triangular bent leaf springs 93 are abutted on the upper surfaces of the inwardly-bent flanges 34 of the lower core 30.

By the spring force of the four leaf springs 93, the flanges 34 of the lower core 30 of the coil assembly 2 and the bent portion 43 of the stuffing 40 of the body-pipe assembly 3 are urged in a direction to separate from each other. With this urging force of the leaf springs 93, the coil assembly 2 and the body-pipe assembly 3 are coupled to each other.

In the present embodiment, the leaf springs 93 are designed to generate a spring force of 15N to 25N per each leaf spring and 60N to 100N by a total of four leaf springs.

Conventionally, a coil assembly and a body-pipe assembly are coupled to each other for example by inserting a fixed core welded to an upper end of a hollow portion of a guide pipe of the body-pipe assembly through a hollow hole of a drive unit and fixing the fixed core at the upper end with a stopper ring. At that time, a wave washer is inserted between the coil assembly and the body-pipe assembly to urge the coil assembly upward.

The conventional method has problems that the number of components is large and a coupling portion is provided in the upper part of a solenoid part. This method is therefore inapplicable to a configuration that a fixed core does not extend through a solenoid part.

In the present embodiment, in contrast, the coil assembly 2 and the body-pipe assembly 3 can be coupled to each other by use of only the clip 91 having a spring force in combination with the inwardly-bent flanges 34 of the lower core 30 and the coil assembly 2 and the bent portion 43 of the stuffing 40 of the body-pipe assembly 3. Thus, the number of components can be reduced. Further, the height of the solenoid valve 1 can be designed to be low.

As shown in FIG. 8, finally, a stick-on label 88 is stuck on the coil assembly 2. Further, even though not illustrated in the drawing, a coil gasket and a DIN case assembly are attached to the coil assembly 2 with three screws. In addition, a DIN gasket and a DIN terminal box are attached to the DIN case assembly with a screw. The solenoid valve 1 is thus completed.

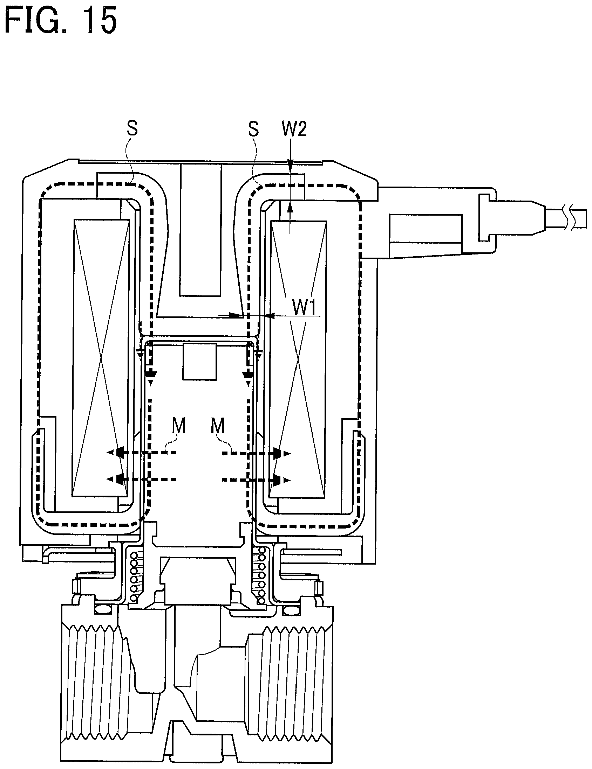

Next, the magnetic circuit of the solenoid valve 1 will be described below. FIG. 15 shows the magnetic circuit in the solenoid valve 1 and corresponds to FIG, 1, from which hatching lines are omitted.

As shown in FIG. 15, in the magnetic circuit, a magnetic flux S is limited by the thickness W1 of the peripheral wall portion, which is smallest in cross-sectional area as shown in FIG. 12, of the protruding portion near the bottom wall portion. In the present embodiment, however, the thickness W1 of the peripheral wall portion near the bottom wall portion is as thick as 80% or more of the thickness W2 of the flat steel plate used as a blank. Accordingly, a sufficient magnetic flux can be generated and thus the attraction force of the solenoid part is not decreased. The solenoid valve can maintain the response for opening at the high level.

In the present embodiment, the flare pipe 50 is made of magnetic material for the following reason. When the guide pipe for guiding the plunger is made of magnetic metal, usually, the outer peripheral surface of the plunger is attracted to the guide pipe and hence a large sliding resistance is generated therebetween. To avoid such a resistance, therefore, the guide pipe is made of non-magnetic material.

However, when the guide pipe is made of non-magnetic material, non-magnetic metal exists at some point of a main magnetic circuit of a magnetic flux flowing from the fixed core to the plunger. This causes a problem with an increased resistance in the main magnetic circuit, thus decreasing a magnetic flux allowed to flow.

In the present embodiment, to avoid the aforementioned problems, the flare pipe 50 is made of magnetic metal. Accordingly, a magnetic flux flows through the flare pipe 50 made of magnetic metal, increasing a transverse attraction force applied to the plunger 60 enclosed in the cylindrical portion 51 of the flare pipe 50. Therefore, when the plunger body 61 repeatedly slides against the cylindrical portion 51, their sliding surfaces may be deteriorated and abrasion powder due to such a repeated sliding motion may cause an increase in sliding resistance, leading to operation failure. To prevent those defects, in the present embodiment, the upper wear ring 63 and the lower wear ring 65 are arranged in contact with the inner peripheral surface (the sliding inner surface 51a) of the cylindrical portion 51 to form a clearance of about 0.5 mm between the outer peripheral surface (the intermediate side surface 61a) of the plunger body 61 and the inner peripheral surface (the sliding inner surface 51a) of the cylindrical portion 51.

This clearance serves as a magnetic resistance to the magnetic flux M laterally flowing from the outer peripheral surface (61a) of the plunger body 61 to the inner peripheral surface (51a) of the cylindrical portion 51. This can reduce the attraction force to be generated between the inner peripheral surface (51a) of the cylindrical portion 51 and the outer peripheral surface (61a) of the plunger body 61.

As described in detail above, according to the solenoid valve 1 in the present embodiment, the solenoid valve 1 includes the hollow cylindrical coil molded part 20, the plunger 60, and the valve element 75, in which the plunger 60 is attracted upon energization of the coil molded part 20 to move the valve element 75. The solenoid valve 1 includes the flare pipe 50 having the sliding inner surface 51a on which the plunger 60 slides. The flare pipe 50 is provided with the large-diameter portion 53 larger in diameter than the sliding inner surface 51a. Inside this large-diameter portion 53, the compression spring 59 is accommodated to urge the plunger 60 in a direction toward the valve seat 73. Accordingly, the diameter-widening portion 52 forming the large-diameter portion 53 can absorb the impact caused when the plunger 60 strikes against the inner surface of the top wall 55 of the flare pipe 50. Thus, stress concentration on the flange 54 through which the flare pipe 50 is fixed to the body 70 is mitigated. The flare pipe 50 is therefore less likely to be broken. In addition, since the compression spring 50 is accommodated inside the large-diameter portion 53, that is, in parallel with the flare pipe 50, the total height of the solenoid valve can be designed to be low. This configuration can meet the needs for a compact solenoid valve in the relevant industrial field.

In the aforementioned solenoid valve 1, the diameter-widening portion 52 forming the large-diameter portion 53 extends perpendicular to the large-diameter portion 53. Accordingly, when the compression spring 59 is mounted in the large-diameter portion 53, the one end of the compression spring 59 is supported by the diameter-widening portion 52 extending perpendicular to the large-diameter portion 53. Thus, the compression spring 59 can be stably held over its entire circumference. This enables uniform distribution of the urging force of the compression spring 59 on the entire circumference of the valve element 75. The response property of the solenoid valve 1 can be stably enhanced.

In a case where a diameter-widening portion includes a tapered or inclined surface as disclosed in Patent Document 2, for example, when an urging spring is mounted in this diameter-widening portion, the urging spring is apt to incline with respect to the axis of a valve element. Thus, a stable pressing force could not be applied uniformly over the entire circumference of a valve seat, leading to a problem with poor sealing strength. Further, sliding resistance may be increased, resulting in operation failure.

In the aforementioned solenoid valve 1, the plunger 60 includes the upper wear ring 63 on an upper-end side surface (i.e. the upper part of the outer peripheral surface) and the lower wear ring 65 and the flange 67 on a lower-end side surface (i.e. a lower part of the outer peripheral surface). The compression spring 59 is placed so that its one end is abutted on the flange 67. Furthermore, the plunger 60 includes the intermediate side surface 61a between the upper wear ring 63 and the lower wear ring 65, and the upper wear ring 63 and the lower wear ring 65 are configured to form a clearance between the intermediate side surface 61a of the plunger 60 and the sliding inner surface 51a of the cylindrical portion 51 of the flare pipe 50.

A guide pipe (the flare pipe 50) is conventionally made of non-magnetic metal. This is because a magnetic metal guide pipe allows a magnetic flux to flow therethrough, so that a magnetic flux allowed to flow to a movable core decreases, resulting in lowering of a force that attracts the movable core.

In contrast, in the present embodiment, a part of the core is deformed to constitute a fixed core and it is therefore difficult to connect an upper end of the guide pipe and the fixed core by welding for sealing. Accordingly, the flare pipe 50 with its upper end closed by the top wall 55 is used to allow the movable core to strike against the inner surface of the top wall 55 of the flare pipe 50 instead of the fixed core. In such a configuration, if the flare pipe 50 is made of non-magnetic material, the top wall 55 of the flare pipe 50 becomes resistance to a magnetic circuit, which causes a problem with a decrease in magnetic flux. To avoid such a defect, in the present embodiment, the flare pipe 50 is made of magnetic material.

Accordingly, when a magnetic flux flows through the flare pipe 50 made of magnetic metal, increasing a transverse attraction force applied to the plunger 60 enclosed in the cylindrical portion 51 of the flare pipe 50, the plunger body 61 slides against the cylindrical portion 51. Repetition of this sliding motion may deterioration of their sliding surfaces and generation of abrasion powder leading to an increase in sliding resistance, resulting in operation failure. To prevent those defects, in the present embodiment, the upper wear ring 63 and the lower wear ring 65 are arranged in contact with the inner peripheral surface of the cylindrical portion 51 to form a clearance of about 0.5 mm between the outer peripheral surface of the plunger body 61 and the inner peripheral surface of the cylindrical portion 51.

This clearance serves as a magnetic resistance to the magnetic flux M laterally flowing from the outer peripheral surface (the intermediate side surface 61a) of the plunger body 61 to the inner peripheral surface (sliding inner surface 51a) of the cylindrical portion 51. This can reduce the attraction force to be generated between the inner peripheral surface of the cylindrical portion 51 and the outer peripheral surface of the plunger body 61. The response property of the solenoid valve 1 can also be enhanced.

The foregoing embodiments are mere examples and give no limitation to the present invention. The present invention may be embodied in other specific forms without departing from the scope of the appended claims.

For instance, in the aforementioned embodiment, the upper wear ring 63 is formed to protrude at predetermined intervals, but it may protrude over an entire circumference. The lower wear ring 65 may also be formed to protrude over an entire circumference.

### Reference Signs List

- 1: Solenoid valve
- 10: Upper core
- 11: Upper plate portion
- 12: Protruding portion
- 20: Coil molded part
- 30: Lower core
- 40: Stuffing
- 50: Flare pipe
- 51: Cylindrical portion
- 52: Diameter-widening portion
- 53: Large-diameter portion
- 59: Compression spring
- 60: Plunger
- 63: Upper wear ring
- 65: Lower wear ring
- 70: Body
- 91: Clip
- 92: Clip body
- 93: Leaf spring

## Claims

1. A solenoid valve (1) including a hollow cylindrical solenoid part (20), a movable core (60), and a valve element (75), in which the movable core (60) is attracted upon energization of the solenoid part (20) to move the valve element (75),
wherein the solenoid valve (1) further includes a magnetic pipe (50) having a sliding inner surface (51a) on which the movable core (60) slides and a cylindrical portion (51) closed by a top face (55),
the magnetic pipe (50) includes a large-diameter portion (53) having a larger diameter than the sliding inner surface (51a),
an urging spring (59) is accommodated inside the large-diameter portion (53) to urge the movable core (60) in a direction toward a valve seat (73), and wherein
the magnetic pipe (50) includes a diameter-widening portion (52) extending perpendicular to the large-diameter portion (53) to form the large-diameter portion (53),
**characterized in that**:
the solenoid valve further includes a magnetic core including an upper core (10) and a lower core (30) surrounding the solenoid part (20) to form a magnetic circuit, the lower core (30) being placed to form a clearance with respect to the diameter-widening portion (52).

2. The solenoid valve (1) according to claim 1, wherein the movable core (60) is provided with an upper wear ring (63) on an upper-end side surface, and a lower wear ring (65) and a flange (67) on a lower-end side surface,
the urging spring (59) is placed so that an end of the urging spring is abutted on the flange (67),
the movable core (60) includes an intermediate side surface (61a) between the upper wear ring and the lower wear ring, and
the upper wear ring (63) and the lower wear ring (65) are configured to form a clearance between the intermediate side surface (61a) of the movable core (60) and the sliding inner surface (51a) of the magnetic pipe (50).

## Patentansprüche

1. Magnetventil (1) mit einem hohlen zylindrischen Magnetteil (20), einem beweglichen Kern (60) und einem Ventilelement (75), wobei der bewegliche Kern (60) bei Erregung des Magnetteils (20) angezogen wird, um das Ventilelement (75) zu bewegen,
wobei das Magnetventil (1) ferner ein Magnetrohr (50) mit einer gleitenden Innenfläche (51a), auf der der bewegliche Kern (60) gleitet, und einen zylindrischen Abschnitt (51), der durch eine Oberseite (55) verschlossen ist, aufweist,
das Magnetrohr (50) einen Abschnitt (53) mit großem Durchmesser aufweist, der einen größeren Durchmesser als die gleitende Innenfläche (51a) hat,
eine Druckfeder (59) im Inneren des Abschnitts mit großem Durchmesser (53) untergebracht ist, um den beweglichen Kern (60) in Richtung eines Ventilsitzes (73) zu drängen,
und wobei das Magnetrohr (50) einen sich senkrecht zu dem Abschnitt (53) mit großem Durchmesser erstreckenden Abschnitt (52) mit sich erweiterndem Durchmesser aufweist, um den Abschnitt (53) mit großem Durchmesser zu bilden, **dadurch gekennzeichnet, dass** das Magnetventil ferner einen Magnetkern mit einem oberen Kern (10) und einem unteren Kern (30) aufweist, der das Magnetteil (20) umgibt, um einen Magnetkreis zu bilden, wobei der untere Kern (30) so angeordnet ist, dass er einen Zwischenraum in Bezug auf den Abschnitt (52) mit sich erweiterndem Durchmesser bildet.

2. Magnetventil (1) gemäß Anspruch 1, wobei der bewegliche Kern (60) mit einem oberen Verschleißring (63) an einer Seitenfläche am oberen Ende und einem unteren Verschleißring (65) und einem Flansch (67) an einer Seitenfläche am unteren Ende versehen ist,
die Druckfeder (59) so platziert ist, dass ein Ende der Druckfeder an den Flansch (67) stößt,
der bewegliche Kern (60) eine seitliche Zwischenfläche (61a) zwischen dem oberen Verschleißring und dem unteren Verschleißring aufweist, und
der obere Verschleißring (63) und der untere Verschleißring (65) so konfiguriert sind, dass sie einen Zwischenraum zwischen der seitlichen Zwischenfläche (61a) des beweglichen Kerns (60) und der gleitenden Innenfläche (51a) des Magnetrohrs (50) bilden.

## Revendications

1. Soupape à solénoïde (1) incluant une partie solénoïde cylindrique creuse (20), un noyau mobile (60), et un élément de soupape (75), dans laquelle le noyau mobile (60) est attiré lors d'une alimentation en courant de la partie solénoïde (20) pour déplacer l'élément de soupape (75),
dans laquelle la soupape à solénoïde (1) inclut en outre un tuyau magnétique (50) ayant une surface intérieure coulissante (51a) sur laquelle le noyau mobile (60) coulisse et une portion cylindrique (51) fermée par une face du dessus (55),
le tuyau magnétique (50) inclut une portion de grand diamètre (53) ayant un plus grand diamètre que la surface intérieure coulissante (51a),
un ressort de poussée (59) est contenu à l'intérieur de la portion de grand diamètre (53) pour pousser le noyau mobile (60) dans une direction vers un siège de soupape (73),
et dans laquelle le tuyau magnétique (50) inclut une portion d'élargissement de diamètre (52) s'étendant perpendiculaire à la portion de grand diamètre (53) pour former la portion de grand diamètre (53),
**caractérisée en ce que** :
la soupape à solénoïde inclut en outre un noyau magnétique incluant un noyau supérieur (10) et un noyau inférieur (30) entourant la partie solénoïde (20) pour former un circuit magnétique, le noyau inférieur (30) étant placé pour former un jeu par rapport à la portion d'élargissement de diamètre (52).

2. Soupape à solénoïde (1) selon la revendication 1, dans laquelle le noyau mobile (60) est pourvu d'une bague d'usure supérieure (63) sur une surface latérale d'extrémité supérieure, et d'une bague d'usure inférieure (65) et d'une bride (67) sur une surface latérale d'extrémité inférieure,
le ressort de poussée (59) est placé de façon à ce qu'une extrémité du ressort de poussée vienne buter sur la bride (67),
le noyau mobile (60) inclut une surface latérale intermédiaire (61a) entre la bague d'usure supérieure et la bague d'usure inférieure, et
la bague d'usure supérieure (63) et la bague d'usure inférieure (65) sont configurées pour former un jeu entre la surface latérale intermédiaire (61a) du noyau mobile (60) et la surface intérieure coulissante (51a) du tuyau magnétique (50).
